Europäisches Patentamt

European Patent Office

Office européen des brevets

(11) Veröffentlichungsnummer: **0 235 529**
**A2**

(12) **EUROPÄISCHE PATENTANMELDUNG**

(21) Anmeldenummer: 87100728.2

(51) Int. Cl.4: **H04M 9/08 , H04Q 3/62**

(22) Anmeldetag: **20.01.87**

(30) Priorität: **28.02.86 DE 3606516**

(43) Veröffentlichungstag der Anmeldung:
**09.09.87 Patentblatt 87/37**

(84) Benannte Vertragsstaaten:
**AT BE ES FR GB IT NL SE**

(71) Anmelder: **TELENORMA Telefonbau und Normalzeit GmbH**
**Mainzer Landstrasse 128-146**
**D-6000 Frankfurt (Main)(DE)**

(72) Erfinder: **Daffner, Klaus, Dipl.-Ing. TH**
**Offenbacherstrasse 67**
**D-6078 Neu Isenburg(DE)**
Erfinder: **Brunner, Udo, Dipl.-Ing. FH**
**Auf dem Ried 22**
**D-6000 Frankfurt 56(DE)**
Erfinder: **Schroeder, Wolfgang, Dipl.-Ing. TH**
**Berlinerstrasse 1**
**D-6236 Eschborn(DE)**

(54) **Schaltungsanordnung für Freisprech- und Lauthöreinrichtungen bei Fernsprechapparaten.**

(57) Die erfindungsgemäße Schaltungsanordnung besteht darin, daß zentral angeordnete Freisprechregeleinrichtungen von dem in der Vermittlungsanlage vorhandenen Koppelfeld in jede Fernsprechverbindung einschaltbar sind. Die Zuschaltung einer Freisprechregeleinrichtung in eine Fernsprechverbindung geschieht durch eine vom Teilnehmerapparat abzugebendes, über die Teilnehmerleitung zur Fernsprechvermittlungsanlage übertragenes Signal, das von einer zentralen oder teilzentralen Steuerung ausgewertet wird. Jede Freisprechregeleinrichtung ist wie ein Teilnehmer oder wie ein Verbindungsweg mit dem Koppelfeld verbunden.

Fig. 1a

Fig. 1b

## Schaltungsanordnung für Freisprech-und Lauthöreinrichtungen bei Fernsprechapparaten

Die Erfindung betrifft eine Schaltungsanordnung für Freisprech-und Lauthöreinrichtungen bei Fernsprechapparaten, wie dies im Oberbegriff des Patentanspruches 1 näher bezeichnet ist.

Es ist bekannt, daß bei Freisprech-und Lauthöreinrichtungen für Fernsprechapparate besondere Maßnahmen notwendig sind, um durch akustische und elektrische Rückkopplungen verursachte Beeinträchtigungen des Freisprechbetriebes zu vermeiden. Dabei handelt es sich meist um Pfeifgeräusche, die durch eine fälschliche Verstärkung des Sendesignals im Empfangszweig entstehen können, wenn keine ausreichende elektrische oder akustische Dämpfung zwischen Sender und Empfänger im gleichen Gerät vorhanden ist.

Aus der DE-OS 33 07 552 ist es bekannt, eine Schaltungsanordnung zur Pfeifunterdrückung bei Fernsprechapparaten mit Lauthörverstärker anzuordnen, womit erreicht wird, daß durch eine regelbare Dämpfung Rückkopplungen vermieden werden. Dabei werden die Stellsignale zur Steuerung des Verstärkungsgrades des Lauthörverstärkers durch einen Phasendetektor, bzw. Pegeldetektor gewonnen, der das Empfangssignal mit dem Sendesignal vergleicht. Die in der DE-OS 33 07 552 beschriebene Schaltung ist fest in dem Fernsprechapparat eingebaut, so daß in dem betreffenden Gerät dafür ein entsprechender Platz vorgesehen sein muß. Außerdem ist die dafür notwendige elektrische Leistung entweder über die Teilnehmeranschlußleitung oder von der im Apparat vorhandenen Netzstromversorgungseinrichtung zusätzlich bereitzustellen.

Es ist außerdem aus der DE-AS 20 16 394 bekannt, eine Echosperre für einen Sprechkreis auf einem Vierdrahtübertragungssyem bei einem Übergang auf einen Zweidrahtübertragungsweg vorzusehen, wobei ebenfalls selbsttätige Regelungen stattfinden. Derartige Einrichtungen sind fest in einen Verbindungsweg, vorwiegend in eine Übertragungsstrecke mit längeren Laufzeiten, eingefügt. Derartige Übertragungsstrecken sind aber ihrer Aufgabe und der Benutzungshäufigkeit entsprechend ohnehin besonders aufwendig, weil eine hohe Übertragungsqualität gefordert werden muß. Es wäre aber unwirtschaftlich bei relativ kurzen Verbindungsstrecken, wie sie beispielsweise bei Internverkehr in Fernsprechnebenstellenanlagen auftraten, in jedem Verbindungsweg Echosperren einzubauen.

Die Aufgabe der vorliegenden Erfindung besteht darin, eine Schaltungsanordnung anzugeben, womit Fernsprechapparate mit Lauthör-und/oder Freisprecheinrichtungen von den Aufwendungen befreit werden können, die, wie vorher beschrieben, zur Sicherstellung eines einwandfreien Betriebs erforderlich sind, ohne daß dieser Aufwand an anderer Stelle in jeden Verbindungsweg der betreffenden Vermittlungsanlage fest eingebracht werden muß.

Diese Aufgabe wird durch eine Merkmalskombination gelöst, wie sie im Patentanspruch 1 angegeben ist. Damit wird in vorteilhafter Weise erreicht, daß eine oder mehrere Freisprechregeleinrichtungen an zentraler Stelle angeordnet sind, die bedarfweise in eine Fernsprechverbindung eingeschaltet werden können, wenn ein Teilnehmer mit Freisprechoder Lauthöreinrichtung an der Verbindung beteiligt ist. Dies bedeutet, daß die Anzahl der Freisprechregeleinrichtungen nicht sehr groß sein muß, auf jeden Fall geringer als die Anzahl der Apparate, und auch geringer als die Anzahl aller möglichen Verbindungen, weil die Anzahl der Freisprechregeleinrichtungen nach dem Benutzungsgrad, also nach dem Verkehrsaufkommen dimensioniert werden kann. Deshalb läßt sich auch der geringe Mehraufwand an Koppelpunkten ohne weiteres vertreten. Hinsichtlich der Stromversorgung bestehen bei dieser Art der zentralen Anordnung keinerlei Probleme. Da außerdem an zentraler Stelle mehr Platz zur Verfügung steht, kann jede einzelne Freisprechregeleinrichtung aufwendiger ausgeführt werden, so daß sich daraus eine bessere Sprachqualität und ein höheres Maß an Störsicherheit ergibt. Weiterbildungen der Erfindung ergeben sich aus den Unteransprüchen.

Ein Ausführungsbeispiel der Erfindung wird nachfolgend anhand von Zeichnungen näher erläutert.

Es zeigt

Fig. 1a die Ankopplung einer Freisprechregeleinrichtung in einen Verbindungsweg, bei dem nur ein Teilnehmeranschluß mit einer Freisprech-und/oder Lauthöreinrichtung ausgestattet ist.

Fig. 2a die Anordnung der Freisprechregeleinrichtung in einem Vierdraht-Sprechkreis.

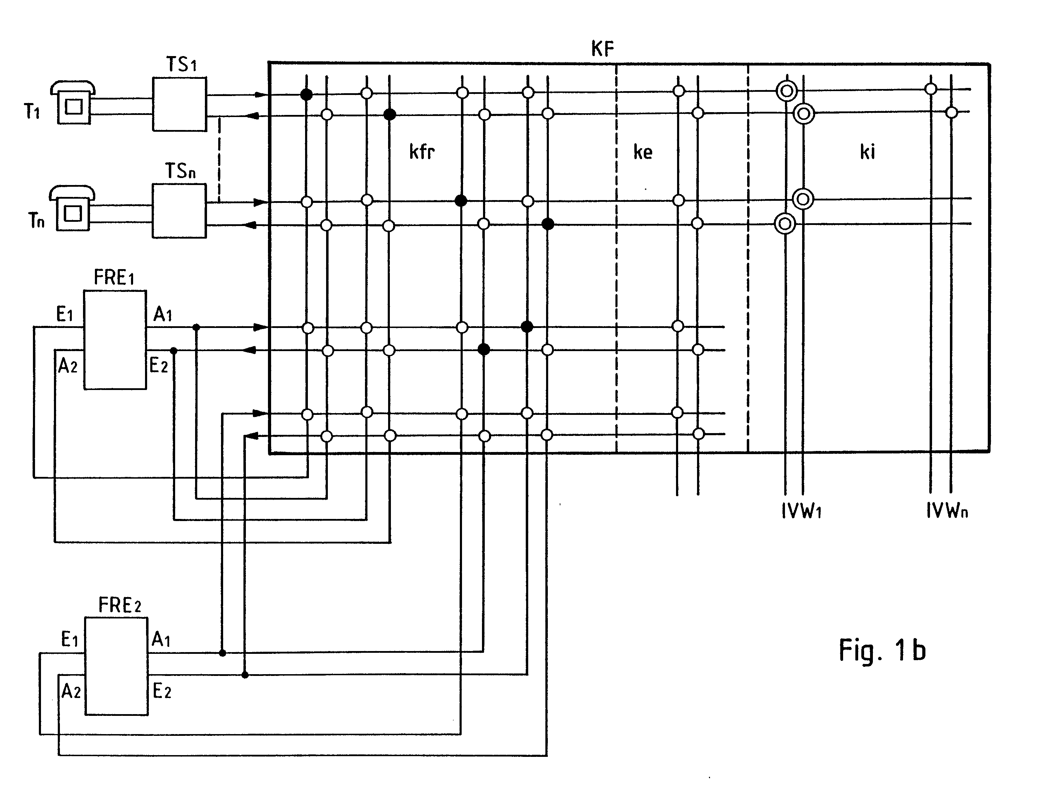

Fig. 1b die Einschaltung von zwei Freisprechregeleinrichtungen, wenn an einer Verbindung beide Teilnehmer mit Freisprech-und Lauthöreinrichtungen ausgestattet sind.

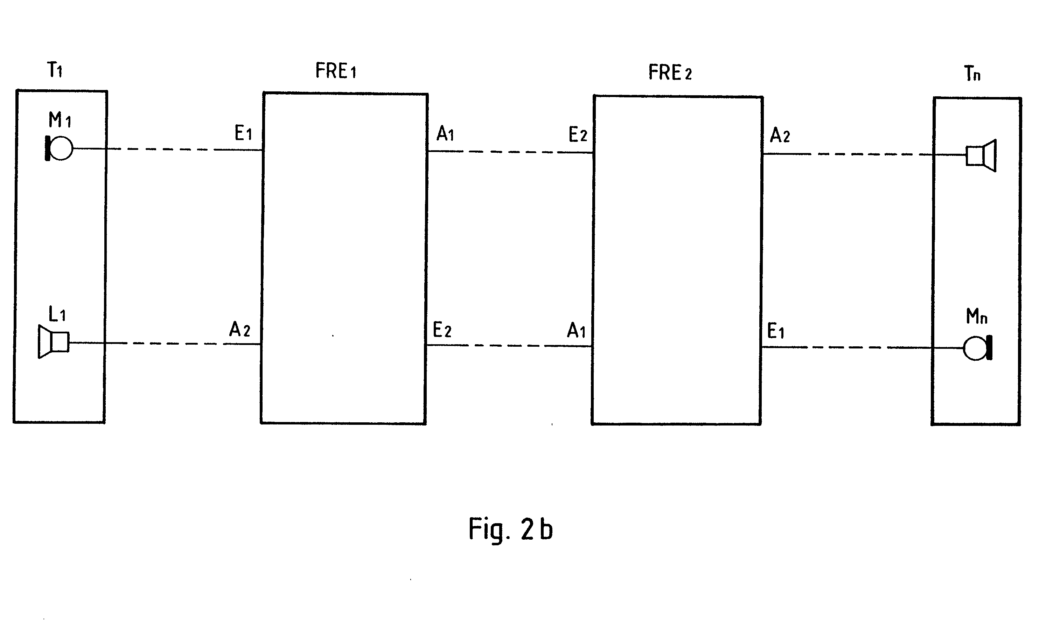

Fig. 2b die Anordnung der beiden hintereinander geschalteten Freisprechregeleinrichtungen.

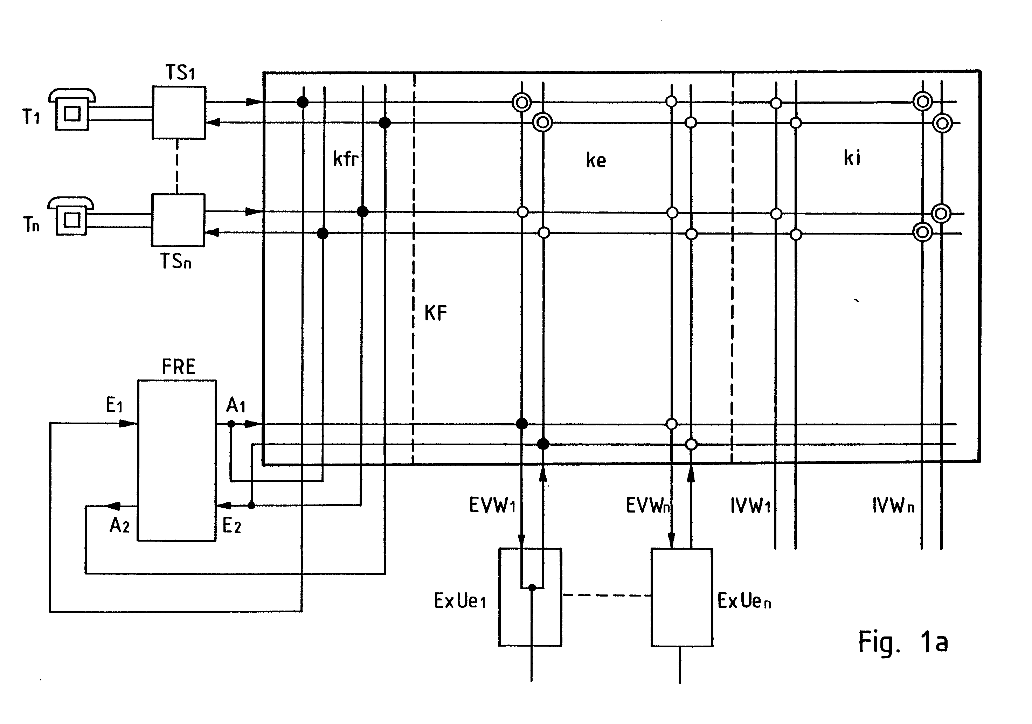

Der in Fig 1a dargestellte Teilnehmeranschluß T1 kann über seine Teilnehmeranschlußschaltung TS1 direkt mit einem weiteren Teilnehmeranschluß Tn über dessen Teilnehmeranschlußschaltung TSn über einen internen Verbindungsweg IVWn verbunden sein. Zu diesem Zweck sind innerhalb des Koppelfeldbereiches KI im Koppelfeld KF die mit Doppelkreisen bezeichneten Koppelpunkte durchgeschaltet. Der Teilnehmeranschluß T1 kann aber auch über einen Externverbindungsweg EVW1 und eine Externübertragung ExUe1 mit einem nicht an der gleichen Vermittlungsanlage angeschlossenen Teilnehmeranschluß verbunden sein. Für den Fall der Internverbindung sei angenommen, daß nur ein Teilnehmeranschluß, im Beispiel T1, eine Freisprech-und/oder Lauthöreinrichtung hat. In diesem Fall und auch bei einer Externverbindung genügt es, daß nur eine Freisprechregeleinrichtung FRE in den jeweiligen Verbindungsweg eingeschleift wird.

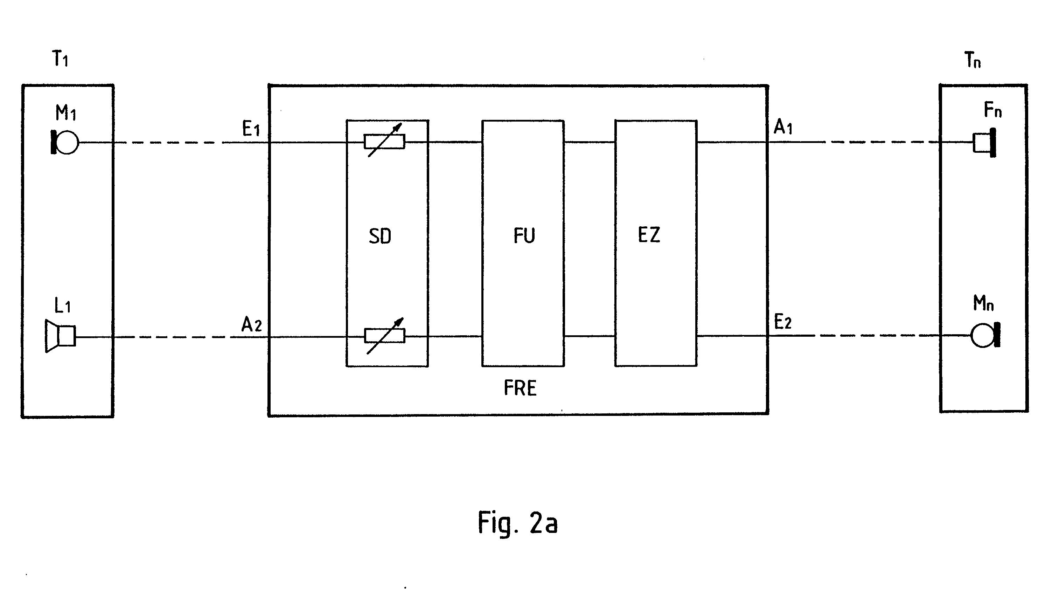

Um die Einschaltung einer Freisprechregeleinrichtung FRE in einen Verbindungsweg zu bewirken, wird ein besonderes Signal vom Teilnehmeranschluß T1 über dessen Anschlußleitung zur Vermittlungsanlage übertragen. Von nicht dargestellten Steuereinrichtungen, insbesondere von der Koppelfeldsteuerung werden dabei die Koppelpunkte für das direkte Durchschalten der Verbindung, in der Fig. 1a als Doppelkreise dargestellt, geöffnet, so daß die Verbindung darüber nicht mehr besteht. Statt dessen werden neue Koppelpunkte aktiviert, die eine Verbindung zur Freisprechregeleinrichtung FRE herstellen. Dabei wird der Sendeausgang der Teilnehmeranschlußschaltung TS1 mit einem Eingang E1 der Freisprechregeleinrichtung FRE verbunden. Der zugehörige Ausgang A1 wird gleichzeitig, je nach vorher gewesener Verbindung entweder mit dem Empfangseingang der betreffenden Teilnehmeranschlußschaltung TSn oder mit dem Empfangseingang der Externübertragung ExUe verbunden. Für die andere Gesprächsrichtung wird entweder der Sendeausgang der beteiligten Teilnehmeranschlußschaltung TSn oder der Sendeausgang der Externübertragung ExUe 1 mit dem zweiten Eingang E2 der Freisprechregeleinrichtung FRE verbunden. Der zugehörige zweite Ausgang A2 wird dann direkt zum Empfangseingang des betreffenden Teilnehmerananschlusses T1 durchgeschaltet. Die beim Einbeziehen der Freisprechregeleinrichtung FRE neu durchzuschaltenden Koppelpunkte sind in der Zeichnung als ausgefüllte Kreise dargestellt. Damit ist die Freisprechregeleinrichtung FRE wie ein Vierpol in die Verbindung einbezogen, wie dies in Fig. 2a dargestellt ist.

In der Fig. 2a ist dargestellt, daß an der dem Teilnehmer anschluß T1 zugewandten Seite der Freisprechregeleinrichtung FRE eine sprachgesteuerte Dämpfung SD angeordnet ist. Zusätzlich oder alternativ können in der Freisprechregeleinrichtung FRE auch Frequenzumsetzer FU und/oder adaptive Echoentzerrer EZ enthalten sein. Bei der sprachgesteuerten Dämpfung SD ist vorgesehen, daß diese sich automatisch auch auf die übertragungstechnischen Bedingungen der dem Teilnehmeranschluß T1 zugehörigen Teilnehmeranschlußleitung einstellt. Damit ist eine optimale Anpassung des eine Freisprech-und/oder Lauthöreinrichtung enthaltenden Fernsprechanschlusses T1 gegeben, so daß die Übertragungseigenschaften verbessert werden.

Innerhalb der Freisprechregeleinrichtung FRE kann außerdem ein Frequenzumsetzer FU und/oder ein Echoentzerrer EZ vorgesehen sein. Mit einem Frequenzumsetzer wird zusätzlich der Vorteil erreicht, daß ein bei Übersteuerung auftretendes Pfeifen nicht schlagartig einsetzt sondern erst nach einer Übergangsphase auftritt. Durch Lautstärkereduzierung kann dann rechtzeitig das System wieder stabilisiert werden. Sollte trotzdem ein Pfeifen einsetzen, so klingt dieses bei entsprechenden Gegenmaßnahmen schneller wieder ab, als es bei einer Schaltung ohne Frequenzumsetzer FU der Fall wäre. Mit einem zusätzlichen Echoentzerrer EZ werden Echos zusätzlich bedämpft, so daß eine weitere Qualitätsverbesserung der Sprache erreichbar ist.

Da die Freisprechregeleinrichtungen FRE zentral angeordnet sind und nur in geringer Anzahl benötigt werden, spielt die Aufwandsfrage eine nicht so große Rolle wie bei der individuellen Zuordnung zu jedem Teilnehmerendgerät. Es ist außerdem denkbar, die Funktionen der einzelnen Komponenten, wie sprachgesteuerte Dämpfung SD, Frequenzumsetzer FU sowie adaptiver Echoentzerrer EZ digital zu realisieren, wozu beispielsweise ein Signalprozessor eingesetzt werden kann. Auch hierbei bietet die zentrale Anordnung der Freisprechregeleinrichtungen FRE erhebliche Vorteile, weil möglicherweise erforderliche verschiedene Spannungen an zentraler Stelle leichter bereitgestellt werden können. Es lassen sich möglicherweise auch an zentraler Stelle vorhandene Steuertakte gemeinsam ausnutzen, ohne daß diese speziell erzeugt werden müssen.

Die Freisprechregeleinrichtungen FRE lassen sich in allen vierdrähtig durchschaltenden Vermittlungsanlagen nach dem erfindungsgemäßen Prinzip anwenden, unabhängig davon ob die Vermittlungsanlage räumlich oder zeitlich, analog oder digital durchschaltet. Werden digital arbeitende Freisprechregeleinrichtungen FRE in digital durchschaltenden Vermittlungsanlagen eingesetzt, so ergibt sich zusätzlich der Vorteil, daß innerhalb der Freisprechregeleinrichtung FRE keine zusätzliche Analog/Digital-bzw. Digital/Analog-Wandlung stattfinden muß. Weitere Vorteile der zentralen Anordnung von Freisprechregeleinrichtungen FRE ergeben sich dadurch, daß es sehr leicht möglich ist, einen Austausch vorzunehmen, wenn aufgrund des technischen Fortschritts preiswertere und/oder qualitativ hochwertigere Einrichtungen verfügbar sind.

Die in Fig. 1b gezeigte Anordnung wird dann angewendet, wenn die an einer Internverbindung beteiligten Teilnehmeranschlüsse T1 und Tn beide mit einer Freisprech-und/oder Lauthöreinrichtung ausgestattet sind. Es werden dann zwei Freisprechregeleinrichtungen FRE1 und FRE2 benötigt, die innerhalb der Verbindung so hintereinander geschaltet eingeschleift sind, wie es in Fig. 2b dargestellt ist. Dabei werden die direkt durchschaltenden, im Bild mit Doppelkreisen dargestellten Koppelpunkte nicht aktiviert, sondern es werden stattdessen die im für die Anschaltung der Freisprechregeleinrichtungen FRE vorgesehenen Koppelbereich kfr des Koppelfeldes KF die mit ausgefüllten Kreisen markierten Koppelpunkte durchgeschaltet. An der Anordnung kann erkannt werden, daß die erste Freisprechregeleinrichtung FRE dem ersten Teilnehmer T1 zugeordnet ist und entsprechend die zweite Freisprechregeleinrichtung FRE2 mit dem anderen Teilnehmer Tn verbunden ist. Da die den Freisprechregeleinrichtungen FRE1 und FRE2 zugeordneten Spalten und Zeilen des Koppelfeldes KF sich grundsätzlich mit allen Teilnehmeranschlüssen verbinden lassen, könnte die Zuordnung der Freisprechregeleinrichtungen FRE auch umgekehrt sein.

Wie aus Fig. 1b ersichtlich ist, ist der Sendeausgang der Teilnehmeranschlußleitung TS1 des Teilnehmeranschlusses T1 mit dem ersten Eingang E1 der ersten Freisprechregeleinrichtung FRE1 verbunden. Der dazugehörende Ausgang A1 ist an dem zweiten Eingang E2 der zweiten Freisprechregeleinrichtung FRE2 angekoppelt. Von dem dazugehörenden zweiten Ausgang A2 gelangen die Sprachsignale direkt zum Empfangseingang der Teilnehmeranschlußschaltung TSn des zweiten Teilnehmeranschlusses Tn. In gleicher Weise verläuft die andere Gesprächsrichtung wie folgt: Sendeausgang der Teilnehmeranschlußschaltung TSn, erster Eingang E1 der zweiten Freisprechregeleinrichtung FRE2, zugehöriger Ausgang A1 zweiter Eingang E2 der ersten Freisprechregeleinrichtung FRE1, zugehöriger Ausgang A2 und von dort zum Empfangseingang der ersten Teilnehmeranschlußschaltung TS1.

Da die Besonderheiten bei der Anschaltung von Freisprechregeleinrichtungen FRE außerhalb des Koppelfeldes KF durchgeführt weden, kann das Koppelfeld KF in seiner grundsätzlichen Struktur unverändert beibehalten werden. Es sind lediglich für jede Freisprechregeleinrichtung FRE zwei wie Verbindungswege geschaltete Spalten des Koppelfeldes KF sowie zwei normalerweise mit Teilnehmeranschlußorgangen TS beschaltete Zeilen des Koppelfeldes KF zusätzlich vorzusehen. Derartige Spalten und Zeilen in einem Koppelfeld KF sind jedoch meist ohnehin vorhanden, weil in den seltensten Fällen ein Koppelfeld bis zum letzten Anschluß beschaltet ist. Sollte dennoch ein einstufiges Koppelfeld KF mit Anschlußschaltungen und Verbindungswegen voll ausgelastet sein, so hat die Vermittlungsanlage bereits eine Größenordnung erreicht, daß entweder das einstufige Koppelfeld KF ohnehin vergrößert werden müßte, oder daß eine mehrstufige Koppelanordnung sinnvoller ist. Bei mehrstufigen Koppelanordnungen lassen sich Freisprechregeleinrichtungen FRE ebenfalls mit Vorteil anwenden, wobei es zweckmäßig ist, diese Freisprechregeleinrichtungen FRE in ein vorbestimmtes Bündel von Zwischenleitungen einzuschleifen. Die Steuereinrichtungen müssen dann so programmiert sein, daß bei der Anforderung einer Freisprechregeleinrichtung FRE das betreffende Zwischenleitungsbündel belegt wird.

Für die Anforderung einer Freisprechregeleinrichtung gibt es mehrere Möglichkeiten. Da Vermittlungsanlagen, insbesondere Fernsprechnebenstellenlagen ohne weiteres in der Lage sind, anhand der Teilnehmeradresse und den diesem Anschluß zugeordneten Berechtigungen zu erkennen, ob bei einem Teilnehmeranschluß eine Freisprech- und/oder Lauthöreinrichtung vorhanden ist, kann - schon bei der Belegung einer Verbindung entschieden werden, ob eine Freisprechregeleinrichtung FRE hinzugeschaltet werden muß. Es erübrigt sich dann ein besonderes Signal über die Teilnehmeranschlußleitung zu übertragen. Die Übertragung eines besonderen Signals über die Teilnehmerleitung zur Fernsprechvermittlungsanlage hat jedoch den Vorteil, daß eine Freisprechregeleinrichtung FRE nur dann eingeschaltet wird, wenn diese auch tatsächlich benötigt wird. Ein derartiges Signal kann im Fernsprechapparat des betreffenden Teilnehmeranschlusses T1 dann erzeugt werden, wenn die Freisprech-und/oder Lauthöreinrichtung eingeschaltet wird. Bei analog betriebenen Teilnehmeranschlußleitungen kann dazu ein besonderes Schaltkennzeichen (z.B. Erdtaste) und /oder eine Wahlinformation benutzt werden. Bei digital betriebenen Anschlußleitungen bietet sich dazu der Signalisierungskanal an. Mit einem über die Teilnehmeranschlußleitung übertragenen besonderen Signal ist außerdem der Vorteil gegeben, daß eine Freisprechregeleinrichtung FRE auch nachträglich in eine Verbindung eingeschaltet werden kann, wenn die Freisprech-und/oder Lauthöreinrichtung auch tatsächlich benutzt wird. In diesem Zusammenhang ist es auch möglich, das die Ein schaltung einer Freisprechregeleinrichtung FRE bewirkende Signal unabhängig von der Einschaltung einer Freisprech-und Lauthöreinrichtung abzugeben, womit auch unabhängig vom Betrieb einer derartigen Einrichtung die Gesprächsqualität verbessert werden kann, wenn dies beispielsweise bei einer stark gestörten Fernverbindung erforderlich ist.

Darüber hinaus kann vorgesehen werden, daß auch ein Signal abgegeben wird, womit die Freisprechregeleinrichtung vom Sprechweg abgekoppelt wird und die ursprünglich direkt durchgeschaltete Verbindung wieder hergestellt wird. Es ist selbstverständlich, daß beim Auslösen einer Verbindung auch die daran beteiligte Freisprechregeleinrichtungen FRE abgeschaltet und für andere Verbindungen freigegeben werden.

## Ansprüche

1. Schaltungsanordnung für Freisprech-und Lauthöreinrichtungen bei Fernsprechapparaten, die vierdrähtig an eine Fernsprechvermittlungsanlage, insbesondere Fernsprechnebenstellenanlage mit vierdrähtig durchschaltendem Koppelfeld angeschlossen sind, wobei Regeleinrichtungen vorgesehen sind, um durch Kopplungen verursachte Beeinträchtigungen des Freisprechbetriebes zu verhindern,
dadurch gekennzeichnet,
daß mindestens eine Freisprechregeleinrichtung - (FRE) zentral angeordnet und über ein Koppelfeld - (KF) in jede Fernsprechverbindung einschaltbar ist, und daß die Zuschaltung einer Freisprechregelrichtung (FRE) in eine Fernsprechverbindung durch ein vom Teilnehmerapparat (T1 bis Tn) aus abzugebendes, über die Teilnehmerleitung zur Fernsprechvermittlungsanlage übertragenes Signal von einer zentralen oder teilzentralen Steuerung aus bewirkt wird.

2. Schaltungsanordnung nach Anspruch 1,
dadurch gekennzeichnet,
daß das die Zuschaltung der Freisprechregeleinrichtung (FRE) bewirkende Signal mit dem Einschalten der Freisprecheinrichtung abgegeben wird.

3. Schaltungsanordnung nach Anspruch 1,
dadurch gekennzeichnet,
daß das die Zuschaltung der Freisprechregeleinrichtung (FRE) bewirkende Signal unabhängig vom Einschalten der Freisprecheinrichtung abgegeben wird.

4. Schaltungsanordnung nach einem der Ansprüche 2 oder 3,
dadurch gekennzeichnet,
daß das die Zuschaltung der Freisprechregeleinrichtung (FRE) bewirkende Signal bei analog betriebenen Anschlußleitungen als besonders Schaltkennzeichen und/oder Wahlinformation übertragen wird.

5. Schaltungsanordnung nach einem der Ansprüche 2 oder 3,
dadurch gekennzeichnet,
daß das die Zuschaltung der Freisprechregeleinrichtung (FRE) bewirkendes Signal bei digital betriebenen Anschlußleitungen im Signalisierungskanal übertragen wird.

6. Schaltungsanordnung nach Anspruch 1,
dadurch gekennzeichnet,
daß die Freisprechregeleinrichtung (FRE) eine Sprachgesteuerte-Dämpfung (SD) und/oder einen Frequenzumsetzer (FU) und/oder einen adaptiven Echoentzerrer (EZ) enthält.

7. Schaltungsanordnung nach Anspruch 1,
dadurch gekennzeichnet,
daß die Funktionen der Komponenten der Freisprechregeleinrichtung (FRE) einzeln oder zusammengefaßt durch einen programmierbaren Signalprozessor verwirklicht werden.

8. Schaltungsanordnung nach Anspruch 1,
dadurch gekennzeichnet,
daß die Freisprechregeleinrichtung (FRE) sowohl über Spalten als auch über Zeilen an ein matrixformig aufgebautes Koppelfeld (KF) angeschaltet ist.

9. Schaltungsanordnung nach Anspruch 1,
dadurch gekennzeichnet,
daß das vierdrähtig durchschaltende Koppelfeld - (KF) auch bei der Anschaltung von Freisprechregeleinrichtungen (FRE) in seiner Grundstrucktur unverändert bleibt.

Fig. 1a

0 235 529

0 235 529

Fig. 1b

T₁

Tₙ

M₁

Fₙ

E₁

A₁

SD

FU

EZ

L₁

A₂

E₂

Mₙ

FRE

Fig. 2a

IN P 4005

0 235 529

Fig. 2 b